# EUROPÄISCHE PATENTSCHRIFT

(11) **EP 1 244 284 B1**
(45) Veröffentlichungstag und Bekanntmachung des Hinweises auf die Patenterteilung: **15.06.2016**
(21) Anmeldenummer: 02006152.9
(22) Anmeldetag: 19.03.2002
(51) Int. Cl.: H04M 3/51, H04M 3/42

(54) **Verfahren und Vorrichtung zum Aufbau zweier Sprachverbindungen zu einem CTI-Arbeitsplatz**
Method and device for establishing two voice connections to a CTI-agent station
Méthode et appareil pour établir deux liaisons vocales vers une position d'agent CTI

(30) Priorität: 19.03.2001 DE 10113439
(43) Veröffentlichungstag der Anmeldung: 25.09.2002
(73) Patentinhaber: SIKOM Software GMBH, 69121 Heidelberg (DE)
(72) Erfinder: Heintz, Frank, Dipl.-Ing., 08064 Zwickau (DE)
(74) Vertreter: Dreykorn-Lindner, Werner

(56) Entgegenhaltungen:
- WO-A-99/55058
- US-A- 5 109 410

## Beschreibung

Die Erfindung betrifft in erster Linie ein Verfahren zum Aufbau von Sprachverbindungen zu einem CTI-Arbeitsplatz, welcher mit einer Vermittlungsanlage zur Steuerung des Telefonverkehrs zum Festnetz oder Funknetz in Verbindung steht, und welcher direkt mit einem Computer oder über ein Netzwerk mit einem CTI-Server in Verbindung steht, der wiederum direkt an die Vermittlungsanlage angeschlossen ist (Oberbegriff des Patentanspruchs 1). Weiterhin betrifft die Erfindung eine Vorrichtung zum Aufbau von Sprachverbindungen zu einem CTI-Arbeitsplatz gemäß dem Oberbegriff des Patentanspruchs 6.

An Telekommunikations-Festnetze werden zunehmend Telekommunikationsanlagen angeschlossen, die eine eigene zentrale Telefonie-Vermittlungsanlage, an welche außer den Telefonie-Endgeräten auch Computer angeschlossen werden, aufweisen. Beim Aufbau solcher CTI-Systeme (Computer Telephony Integration) wird im Prinzip zwischen zwei unterschiedlichen CTI-Systemarten unterschieden. So ist einerseits eine direkte Kopplung eines Computers (Personal Computers) mit einem Telefon-Endgerät, andererseits eine sogenannte Client/Server-Lösung möglich, gemäß der ein Computer über ein lokales Netz (local area network, LAN) mit einem CTI-Server verbunden ist, der wiederum direkt an eine Telekommunikations-Anlage (TK-Anlage) angeschlossen ist. Die Kommunikation zwischen dem Computer und der Telefonie-Vermittlungsanlage findet über einen Bus, der als CTI-Link (CTI: Computer Telephone Interface) bezeichnet wird, statt, um beispielsweise eine Fax-Funktion des Computers zu realisieren und einen Nachrichtenaustausch mittels Daten unmittelbar über das Telekommunikations-Festnetz vorzunehmen.

Um eine einfach zu realisierende Fernbedienung eines Telefonie-Endgeräts mittels eines Computers mit einer vollen Funktion des Telefonie-Endgeräts wie bei einer manuellen Bedienung zu ermöglichen, ist aus der DE 198 27 376 A1 eine Telekommunikationsanlage bekannt, bei der ein Bediensignale für ein Telefonie-Endgerät abgebender Computer über eine Datenverbindung mit der Telefonie-Vermittlungsanlage verbunden ist. Die Telefonie-Vermittlungsanlage ist so eingerichtet, dass sie auf einem Datenkanal der Datenverbindung eingehende Bediensignale in einen zu den Telefonie-Endgeräten führenden Telefonie-Kanal umsetzt, wobei die Telefonie-Endgeräte mit den über den Telefonie-Kanal übermittelten Bediensignalen bedienbar ausgebildet sind. Der in einer herkömmlichen Telekommunikationsanlage vorhandene Bus zum Anschluss von Computern an die Telefonie-Vermittlungsanlage (CTI-Link) wird ausgenutzt, um auch Bediensignale zur Telefonie-Vermittlungsanlage (auf dem B-Kanal) zu übermitteln. Die Telefonie-Vermittlungsanlage setzt die erhaltenen Bediensignale lediglich zur Übermittlung in dem Telefonie-Kanal (D-Kanal) um und überträgt die Bediensignale im übrigen unverändert auf die Telefonie-Endgeräte. Somit erhalten die Telefonie-Endgeräte ihre Bediensignale über den Telefonie-Kanal, so dass displayfähige Telefonie-Endgeräte auch bei der Steuerung durch einen Computer stets eine korrekte Display-Signalisierung haben und im übrigen der Hörer zur Sprachkommunikation genutzt wird.

Weiterhin ist in der DE 198 11 829 A1 ein CTI-System vorgeschlagen worden, welches anwendungsunabhängig auf für eine Rufnummernwahl relevante Informationen zugreift und diese weiterverarbeiten kann. Hierzu ist im einzelnen vorgesehen, dass ein Benutzer des CTI-Systems zunächst eine relevante Zeichenfolge (String) auf dem Bildschirm des Computers des CTI-Systems erkennt und auswählt, was insbesondere durch Markierung dieser relevanten Zeichenfolge erfolgen kann. Anschließend wird der Inhalt der markierten Zeichenfolge gelesen und ausgewertet, wobei abhängig davon, ob die markierte Zeichenfolge Zahlen oder Buchstaben oder eine Kombination von Zahlen und Buchstaben enthält, unterschiedliche Verarbeitungsfunktionen des CTI-Systems hinsichtlich der markierten Zeichenfolge zur Anwendung kommen. Beispielsweise kann beim Erkennen einer Ziffernfolge daraus eine Wahlinformation abgeleitet und das automatische Wählen der Rufnummer über die vorhandene Telefonschnittstelle durchgeführt werden. Beim Erkennen einer Buchstabenfolge kann über eine vorhandene Schnittstelle zu einem Verzeichnis-Server (Directory Server) eine Suche nach dieser Buchstabenfolge als Namenseintrag in der Datenbank des Verzeichnis-Servers, der mehrere elektronische Adressbücher mit entsprechenden Rufnummerneinträgen speichern kann, durchgeführt werden. Wird von dem Verzeichnis-Server eine für eine Wahlinformation relevante Ziffernfolge (Ziffern-String) zurückgemeldet, so wird diese genauso wie eine von dem Benutzer markierte Ziffernfolge behandelt und an die Telefonschnittstelle ein entsprechender Steuerbefehl zum Wählen der der Ziffernfolge entsprechenden Rufnummer übergeben. Dadurch ist das in der DE 198 11 829 A1 vorgeschlagene System völlig unabhängig von der Art des verwendeten CTI-Systems sowie der jeweils verwendeten CTI-Anwendung, welche auf dem Computer des CTI-Systems läuft.

Weiterhin ist aus dem DE 299 08 192 U1 eine Vorrichtung zur drahtlosen Übermittlung von Signalen durch elektromagnetische Wellen bekannt, bei der es ermöglicht wird, Signale mit guter Reichweite und Qualität drahtlos durch elektromagnetische Wellen zu übermitteln, insbesondere vom Arbeitsplatz aus. Dabei ist vorgesehen, dass zum Funken kein spezielles Funkgerät verwendet wird, sondern direkt der Personal Computer mit entsprechender Betriebssoftware, aufgesetzt zum Beispiel auf das Betriebssystem Windows 95 oder Windows 98, sowie mit einer Soundkarte, einem Mikrophon und einem Kopfhörer oder Lautsprechern zum Einsatz kommt. Damit ist der Benutzer, während er am Computer arbeitet, jederzeit erreichbar und kann außerdem nicht nur Sprache, sondern auch andere Daten, wie zum Beispiel einzelne Dateien, übertragen. Sende- und Empfangseinheit müssen nicht direkt im PC integriert sein, sondern können über ein Kabel mit entsprechenden Adaptern mit dem PC verbunden werden. Die Sende- und Empfangseinheit ist dabei über dieses Kabel nicht an eine spezielle Einsteckkarte für den PC angeschlossen, sondern direkt an die Soundkarte und eine serielle Schnittstelle des Computers. Dadurch besteht die Möglichkeit, Sende- und Empfangseinheit zusammen mit der Antenne an einem für die Reichweite ausreichenden und von Funkstörungen weitgehend freien Ort zu platzieren.

Weiterhin ist aus der DE 197 13 538 A1 ein Schnurlostelefon bekannt, bei dem Telefon- und Diktattechnik miteinander vereint sind. Dabei wird davon ausgegangen, dass es bei der ISDN-Technik möglich ist, zwei logische B-Kanäle und einen D-Steuerkanal auf einem Leitungspaar zu übertragen, so dass das vorhandene Zweidraht-Telefonnetz für Telefonie und allgemeine Datenübertragung parallel nutzbar ist. Das eigentliche Schnurlostelefon wird zur Steuerung der Diktatfunktion dabei um eine Sondertastatur ergänzt. Das gesprochene Wort wird digitalisiert und beispielsweise im Voicemail-Server der Telefonanlage gespeichert, wobei die Speicheradresse selbst mit der elektronischen Akte verknüpft wird. Es ist auch möglich dieses als Sprachdatei zusammen mit der elektronischen Akte zu speichern, wobei in diesem Fall jeder wiedergebende Computer mit einer Soundkarte bestückt sein muss, um die Sprachdatei abhören zu können. Computer von Schreibkräften müssen darüber hinaus über einen Kopfhörer und einen Fußschalter verfügen zur Wiedergabe des Diktats in gewohnter Weise. Weiterhin ist es auch möglich, das gesprochene Wort in einem Spracherkennungssystem des Computers gleich in Schriftform zu bringen und an der vorher gewählten Cursorposition in das Schriftstück einzufügen. Während des Diktierens eingehende Telefonate können durch Betätigen einer Taste "Hörer abnehmen" angenommen werden und durch Betätigen der Taste "Hörer auflegen" beendet werden. Die Diktatfunktion bleibt währenddessen im Hintergrund aktiv, ist aber am Schnurlostelefon unterbrochen.

Ein Verfahren und ein System zum Integrieren von verschiedenen Anrufsubsystemen in einem Vermittlungs-Arbeitsplatz ist aus der EP 0 647 050 A2 bekannt. Der Vermittlungs-Arbeitsplatz ist über eine CPU an ein Anrufverteilsystem angeschlossen und zum Zuführen von Sprach-, Daten- und Bildinformationen ist eine Vielzahl von Modulen vorgesehen. Diese werden durch den Vermittler gesteuert, wodurch ein verbesserter Service durch den Anrufvermittler ermöglicht wird.

Weiterhin ist aus der WO 94/14269 ein Vermittlungsarbeitsplatz bekannt, welcher eine Sprachsteuer- und -anpassschaltung sowie eine Sprachschnittstellenschaltung für mindestens zwei Kopfhörer aufweist.

Eine Telefonkonferenzschaltung mit einem router, bei der gleichzeitig ein Telefongespräch geführt und eine zweite Verbindung überwacht werden kann, ist aus der US 6,069,943 A1 bekannt. Dabei schaltet der router getrennte Nachrichtenübertragungskanäle zum Hörer oder der Freisprecheinrichtung des Telefons oder einem zusätzlichen Kopfhörer durch.

Ein programmierbares Verbindungsschaltmodul für eine Multimedia-Telefonvermittlung mit einer Datenbank ist aus der US 6,138,139 A1 bekannt. Dabei ermöglicht das Verbindungsschaltmodul u.a. auch eine Verknüpfung zwischen Projekten, Aufgaben, Kundeninformationen und die Abarbeitung nach Maßgabe der Priorität gespeicherter Daten der Datenbank oder eine Telefonkonferenz oder die Darstellung von Icons (Informationsobjekt). Dabei werden über eine Datenbank-Schnittstellenschaltung entsprechende Verweise zu Projekten und Aufgaben in der Datenbank gespeichert.

Weiterhin ist aus der US 6,175,562 A1 ein automatisches Anrufverteilsystem bekannt, bei dem ankommende Rufe mittels Computer, Codec, Navigationssoftware (Browser software) und Netzwerk, beispielsweise Ethernet, zum Anrufvermittler verteilt werden. Die vom öffentlichen Fernsprechnetz kommenden analogen Fernsprechsignale werden in einem Gateway, wenn nötig, analog-digital gewandelt, danach wird die Bitrate von 64 KBit/s auf ungefähr 5 bis 6 KBit/s reduziert und es werden Datenpakete gebildet. Nach Maßgabe eines Anrufverteilalgorithmus wird der nächste verfügbare Anrufvermittler anhand seiner Internet-Adresse identifiziert (IP adress = **I**nternet **P**rotokoll Adresse) und das vom Anrufer stammende Datenpaket-Sprachsignal wird zum Anrufvermittler über das Ethernet übertragen. Gleichzeitig erzeugen netzwerkfähige Datentools "Dokumente", vorzugsweise in html (**H**ypertext **M**arkup **L**anguage = Seitenbeschreibungssprache), welche den Anrufer betreffende, in einer Datenbasis gespeicherte Informationen enthalten und diese "Dokumente" werden ebenfalls zum Anrufvermittler über das Ethernet übertragen. Der Anrufvermittler kann sich dann mit dem Anrufer unterhalten, wobei er einen Kopfhörer benutzt, welcher mit dem Computer verbunden ist. Gleichzeitig wird am Computer die Navigationssoftware ausgeführt, um zum Anrufvermittler html-Dokumente zu übertragen und aktualisierte Informationen zurückzusenden, während er mit dem Anrufer spricht.

Schließlich ist aus der US 6,041,130 A1 ein auf einer Netzwerktopologie, welche aus einer Vielzahl von Call Centern mit einer Vielzahl von Agent Workstations pro Call Center hierarchisch aufgebaut ist, basierendes Verfahren bekannt, bei dem mittels automatischen Anrufverteiler, Teleset, CTI Server bzw. Internet Server, und Agent Workstation eine Anrufverteilung zwischen den Call Centern und Abwicklung der Gespräche unter Zuhilfenahme des zwischen Teleset und Agent Workstation geschalteten Verteilers, welcher zwei Stummschalter aufweist, mittels eines Kopfhörers mit zwei Mikrofonen und zwei Lautsprechern vorgenommen wird. Dabei stehen die zwei getrennten bidirektionalen Sprachkanäle nicht in einem auf einem Mischbetrieb mit computergestützter Verarbeitung und Steuerung von infolge einer Telekommunikationsverbindung übermittelten Sprach-Informationen begründeten Zusammenhang. Dies wird anhand der Ausgestaltung mit einem Mikrofon und zwei Lautsprechern deutlich, wonach auf dem zweiten Lautsprecher Musik eingespielt wird, welche nicht vom Anrufer oder die Kollegen der anderen Agent Workstation gehört wird und deshalb nicht stört.

Wie die vorstehende Würdigung des Standes der Technik aufzeigt, sind verschiedene CTI-Systeme bzw. verschiedene Anwendungen und Ausgestaltungen computergestützter Telekommunikation bekannt. Der wesentliche Nachteil des oben stehend beschriebenen Standes der Technik liegt darin, dass einerseits der Aufwand für die Verbindung der Computertechnologie und der Telefontechnologie andererseits die Funktionalität auch zur Bedienung relativ hoch ist, weshalb in der Praxis kostengünstige Telekommunikationssysteme fehlen, welche auch ungeübten Benutzern eine sichere Bedienung erlauben. Besonders bedeutsam ist dies, weil die sowohl die Computer- als auch die Telekommunikationsindustrie als äußerst fortschrittliche, entwicklungsfreudige Industrien anzusehen sind, die sehr schnell Verbesserungen und Vereinfachungen aufgreifen und in die Tat umsetzen.

Der Erfindung liegt gegenüber den bekannten computergestützten Telekommunikationssystemen die Aufgabe zugrunde, dieses kostengünstig derart auszugestalten, dass eine rasche und zuverlässige Bedienung sichergestellt wird.

Diese Aufgabe wird, ausgehend von einem Verfahren gemäß Oberbegriff des Patentanspruchs 1, dadurch gelöst, dass der Kopfhörer ein Mikrofon aufweist, welches mit dem Telefon-Endgerät in Verbindung steht, dass der eine an das Telefon-Endgerät angeschlossene Lautsprecher das gesprochene Wort des Anrufers und der andere Lautsprecher die zur Nachricht zugehörige, von einem direkt an den CTI-Arbeitsplatz angeschlossenen Computer oder vom über ein Netzwerk angeschlossenen CTI-Server stammende Information gleichzeitig und fortlaufend wiedergibt, dass die Sprachnachricht des Anrufers entweder im Computer oder im CTI-Server mindestens teilweise aufgezeichnet wird und am CTI-Arbeitsplatz benutzergesteuert wieder abrufbar ist, und dass im Falle eines weiteren Anrufs bei bereits zum CTI-Arbeitsplatz bestehender Gesprächsverbindung mittels des Computers (eine automatische Umschaltung im zweiten Sprachkanal und Einsteuerung eines Hinweis auf den neuen Anruf erfolgen, so dass ein Mischbetrieb mit computergestützter Verarbeitung und Steuerung von infolge einer Telekommunikationsverbindung übermittelten Sprach-Informationen einschließlich akustischer Bedienerführung erfolgt.

Das erfindungsgemäße Verfahren weist den Vorteil auf, dass auf überraschend einfache Art und Weise eine zusätzliche Möglichkeit zur raschen und dennoch preisgünstigen Information des Benutzers vorgenommen werden kann. Die Erfindung geht dabei von der Erkenntnis aus, dass das menschliche Hörvermögen zwei Sprachsignale zuverlässig voneinander unterscheiden kann noch dazu, wenn diese von verschiedenen Richtungen kommen. Für die Bearbeitung bzw. Abarbeitung von Anrufen ist zudem die Maskierungsfähigkeit des menschlichen Hörvermögens von Vorteil, so dass auch die Sprachverständlichkeit hoch und die Notwendigkeit, einer Wiederholung relativ gering ist. Weiterhin ist von Vorteil, dass auch hinsichtlich der verschiedenen Anwendungen und Übermittlungen von Informationen das erfindungsgemäße Verfahren keine Beschränkungen unterliegt. Die Ausgestaltung der Erfindung, wonach der Computer und das Telefon-Endgerät drahtgebunden oder drahtlos mit dem Kopfhörer (in Verbindung stehen, weist den Vorteil auf, dass der Benutzer sich am Arbeitsplatz frei bewegen kann, beispielsweise während des Gesprächs eine Akte holen kann, und dass er die Hände frei hat, um in dieser Akte zu blättern und sich Notizen zu machen (die er später der elektronischen Akte bzw. "Sprachakte" zuführt). Weiterhin kann der Benutzer auf einfache Art und Weise sowohl mit dem Anrufer als auch mit der Vorrichtung "sprechen" und die jeweiligen Informationen geben bzw. abspeichern.

Weiterhin wird diese Aufgabe, ausgehend von einer Vorrichtung gemäß Oberbegriff des Patentanspruchs 4, dadurch gelöst, dass der Kopfhörer ein Mikrofon und der CTI-Arbeitsplatz einen Computer aufweist, wobei Computer und Telefon-Endgerät drahtgebunden oder drahtlos mit dem Kopfhörer in Verbindung stehen, dass die Sprachnachricht des Anrufers entweder im Computer oder im CTI-Server mindestens teilweise aufgezeichnet wird und am CTI-Arbeitsplatz benutzergesteuert wieder abrufbar ist, dass im Falle eines weiteren Anrufs bei bereits zum CTI-Arbeitsplatz bestehender Gesprächsverbindung, mittels des Computers eine automatische Umschaltung im zweiten Sprachkanal und Einsteuerung eines Hinweis auf den neuen Anruf erfolgen und dass der erste Lautsprecher, das über das Telefon-Endgerät zugeführte gesprochene Wort des Anrufers und der zweite Lautsprecher, die zur Nachricht des Anrufers aufgrund computergestützter Verarbeitung im Computer oder im über ein Netzwerk (N) angeschlossenen CTI-Server zugehörige anwendungsabhängige und/oder für den Benutzer des CTI-Arbeitsplatzes relevante Sprach-Information gleichzeitig und fortlaufend wiedergibt, so dass ein Mischbetrieb mit computergestützter Verarbeitung und Steuerung von infolge einer Telekommunikationsverbindung übermittelten Sprach-Informationen einschließlich akustischer Bedienerführung erfolgt.

Die erfindungsgemäße Vorrichtung weist den Vorteil auf, dass mit geringem zusätzlichen Kostenaufwand dem Benutzer ein hoher Bedienkomfort geboten wird, da dieser in gewohnter Weise telefonieren kann und ergänzend die Möglichkeiten computergestützter Informationsquellen ausnutzen kann. Weiterhin ist eine akustische Bedienerführung möglich, so dass auch weitgehend ungeschultem Bedienpersonal eine rasche Auftragsabwicklung ermöglicht wird. Die für die verschiedenen Funktionen erforderlichen Eingabebefehle können dem Benutzer automatisch im Dialogverfahren angeboten werden, so dass trotz der möglichen Funktionsvielfalt, die Akzeptanz des Benutzers gegeben ist. Weiterhin ist von Vorteil, dass sowohl die eindeutige Identifizierbarkeit als auch die rasche Information des Anrufers gegeben ist. Durch die Möglichkeit der fortlaufenden Übertragung von Informationen und/oder der Zwischenspeicherung der Sprachnachrichten kann eine von der Belegung der beiden Sprachkanäle abhängige dynamische Anrufverteilung vorgenommen werden. Dadurch kann der Benutzer auch zwei Anrufe quasi "gleichzeitig abwickeln". Die automatische Umschaltung und Einsteuerung des Hinweises erlaubt dem Benutzer am Arbeitsplatz eine Übersicht über die Auslastung und ermöglicht ihm kurzfristig darauf zu reagieren (beispielsweise auf Gesprächsbeendigung drängen). Weiterhin ist eine verbesserte Anrufverteilung möglich, indem die einzelnen Benutzer der CTI-Arbeitsplätze sich untereinander verabreden, wer diesen neuen oder auch den alten Anruf übernimmt.

In Weiterbildung der Erfindung werden, gemäß Patentanspruch 2, Sprachnachricht und Informationen als elektronische Akte abgespeichert, wobei die elektronischen Akten am CTI-Arbeitsplatz benutzergesteuert abgehört und aktualisiert werden können und wobei der Zugriff auf die elektronischen Akten in Abhängigkeit von der Stimme des Benutzers erfolgt.

Diese Weiterbildung der Erfindung weist den Vorteil auf, dass beispielsweise durch "Mitschneiden" für Beweiszwecke eine "Sprachakte" angelegt werden kann. Die einzelnen Informationen können, soweit es die Sprachverständlichkeit erlaubt, beispielsweise der Sprachnachricht "akustisch unterlagert" werden. Weiterhin wird mittels Spracherkennung und Applikationssoftware nicht nur eine interaktive Sprachanwendung möglich, sondern es kann darüber hinaus ein Unified Messaging aufgebaut werden (d.h. Fax, Voice und E-Mail in einem System mit Mailboxzugriff via PC und Telefonieendgerät). Dabei kann in vorteilhafter Weise, wie bei der Entgegennahme von Telefonaten, die Technik zum Erkennen von Sprachkommandos mit Barge-In (Dazwischensprechen) angewandt werden. Ebenso können - mittels Kommandowortgenerator - das oder die gewünschten Wörter einfach eingetippt werden. Wird ein Sprachverarbeitungssystem mit integrierter sprecherunabhängiger, phonembasierender Spracherkennung und grafischer Benutzeroberfläche benutzt, so lassen sich einfach und ohne Programmierkenntnisse interaktive, telefonbedienbare Applikationen erstellen. Mit Hilfe der grafischen Entwicklungsoberfläche lassen sich auch für Ungeübte problemlos Anwendungen programmieren. Für eine Sprachaufzeichnung von 1 Sekunde wird dabei 8 kByte Festplattenspeicher benötigt. Dies bedeutet, dass eine 500 MB Festplatte Sprachinformationen bzw. elektronische Akten mit einer Gesamtzeit von ca. 17 Stunden speichern kann. Durch Sprachkomprimierung kann die erfindungsgemäße kostengünstige Realisierung noch weiter verbessert werden.

Bei einer bevorzugten Ausgestaltung der Erfindung sind, gemäß Patentanspruch 3, die Bedienprozeduren und/oder die Verzeichnisse zum Abrufen der elektronischen Akten an einer Anzeigevorrichtung des CTI-Arbeitsplatzes darstellbar und/oder abhörbar.

Diese Ausgestaltung der Erfindung weist den Vorteil auf, dass eine unverwechselbare Handhabung und eine hohe Bedienungssicherheit ermöglicht werden. Daneben kann die akustische Bedienführung durch eine optische Anzeige unterstützt werden, ohne dass der laufende Betrieb unterbrochen werden muss (beispielsweise Tastenbetätigung zur Quittierung der über den zweiten Sprachkanal empfangenen Information).

In Weiterbildung der Erfindung weist, gemäß Patentanspruch 5, das Netzwerk sowohl ein lokales Netz als auch Telekommunikationsleitungen auf, wobei das lokale Netz einerseits am Computer andererseits am CTI-Server angeschlossen ist und wobei die Telekommunikationsleitungen einerseits mit einem Telefon-Endgerät andererseits mit der Vermittlungsanlage verbunden sind.

Diese Weiterbildung der Erfindung weist den Vorteil auf, dass auf einfache Art und Weise eine netzübergreifende Steuerung und Verbindung, aufbauend auf vorhandene Netze, ermöglicht wird.

Vorzugsweise weist, gemäß Patentanspruch 6, der Computer neben Programmier- und CTI-Programmierschnittstellen eine Schnittstellenschaltung für Sprachsignale auf.

Die Schnittstellenschaltung kann besonders kostengünstig realisiert werden, wenn der Computer auch durch Sprachsignale gesteuert werden kann. In diesem Fall ist lediglich eine "Umschaltung" auf die jeweilige Anwendung erforderlich.

Gemäß Patentanspruch 7 ist das Netzwerk als Zwischenstufe zwischen einem rein seriellen und voll parallelen Bussystem mit serieller Datenübertragung und paralleler Übertragung von Steuersignalen ausgestaltet, der GTI-Server eine Sebnittstellensebaltung zum Anschluss einer zusätzlichen Informationsquelle aufweist.

Diese Ausgestaltung der Erfindung weist den vorteil auf, dass das Bussystem kostengünstig aufgebaut werden kann und dass zeitkritische Abläufe rasch abgewinkelt werden können. Weiterhin können auf einfache Art und Weise weitere Informationen über den zweiten Sprachkanal hörbar gemacht bzw. der elektronischen Akte/"Sprachakte" zugeführt werden.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:

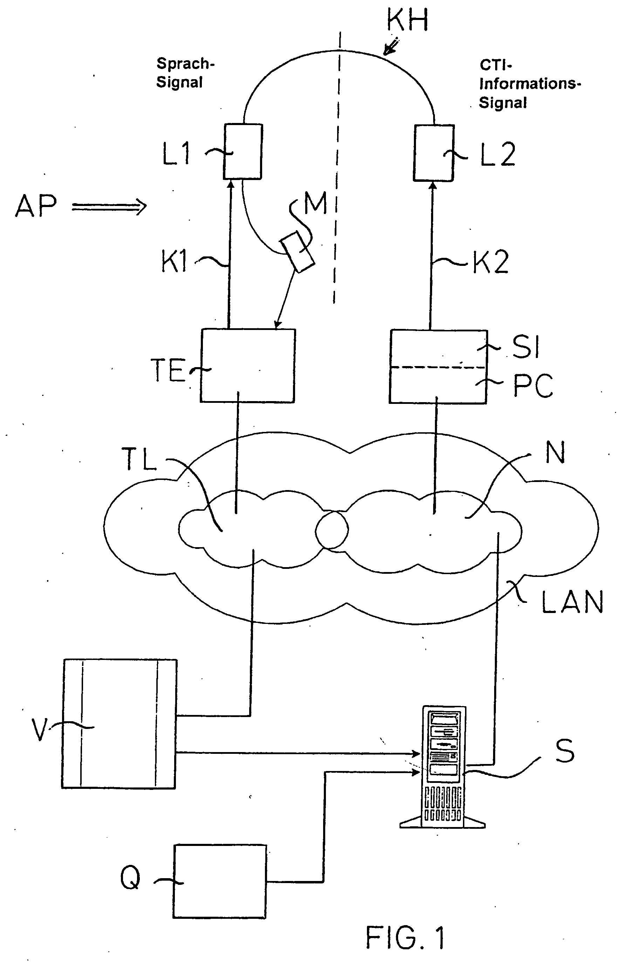

- FIG. 1: eine schematische Darstellung der Komponenten der erfindungsgemäßen Vorrichtung.

Die FIG. 1 zeigt eine bevorzugte Ausführungsform der erfindungsgemäßen Vorrichtung für den Anwendungsfall eines Agenten-Arbeitsplatzes in einem CTI-System. Prinzipiell ist das erfindungsgemäße Konzept für viele Anwendungsfälle geeignet, wobei das Einsatzgebiet von der Leitzentrale bzw. Fernwarte bis hin zur zentralen Auskunftsstelle in Systemen der Daten- und Telekommunikationstechnik reicht.

Der CTI-Arbeitsplatz AP steht mit einer Vermittlungsanlage V zur Steuerung des Telefonverkehrs zum Festnetz oder Funknetz in Verbindung. Weiterhin steht der CTI-Arbeitsplatz AP direkt mit einem Computer PC oder über ein Netzwerk N mit einem CTI-Server S in Verbindung, der wiederum direkt an die Vermittlungsanlage V angeschlossen ist. Beim erfindungsgemäßen Verfahren erfolgt ein Mischbetrieb mit computergestützter Verarbeitung und Steuerung von infolge einer Telekommunikationsverbindung übermittelten Informationen derart, dass sowohl die Sprachnachricht eines Anrufers als auch die anwendungsabhängigen und/oder für den Anrufer relevanten Informationen auf getrennten Sprachkanälen K1, K2 zum CTI-Arbeitsplatz AP übertragbar sind.

Im einzelnen werden zum CTI-Arbeitsplatz AP über beide Sprachkanäle K1, K2 Sprachnachricht und Information fortlaufend übertragen oder die Sprachnachricht des Anrufers wird entweder im Computer PC oder im CTI-Server S mindestens teilweise aufgezeichnet und ist am CTI-Arbeitsplatz AP benutzergesteuert wieder abrufbar. Hierzu ist am CTI-Arbeitsplatz AP ein Kopfhörer KH mit zwei Lautsprechern L1, L2 angeschlossen, wobei der eine Lautsprecher L1 das gesprochene Wort und der andere Lautsprecher L2 die zur Nachricht zugehörigen Informationen wiedergibt.

Das Netzwerk N weist sowohl ein lokales Netz LAN als auch Telekommunikationsleitungen TL auf, wobei das lokale Netz LAN einerseits am Computer PC andererseits am CTI-Server S angeschlossen ist. Die Telekommunikationsleitungen TL sind einerseits mit einem Telefon-Endgerät TE andererseits mit der Vermittlungsanlage V verbunden. Das Netzwerk N kann als Zwischenstufe zwischen einem rein seriellen und voll parallelen Bussystem mit serieller Datenübertragung und paralleler Übertragung von Steuersignalen ausgestaltet werden. Der Computer PC weist neben Programmier- und CTI-Programmierschnittstellen eine Schnittstellenschaltung SI für Sprachsignale auf.

Im CTI-Server S kann eine Schnittstellenschaltung zum Anschluss einer zusätzlichen Informationsquelle Q vorgesehen werden. Weiterhin kann der Kopfhörer KH ein Mikrofon M aufweisen und sowohl Computer PC als auch Telefon-Endgerät TE können drahtlos mit dem Kopfhörer KH in Verbindung stehen. In die erfindungsgemäße Vorrichtung kann jeder Computer PC ab Pentium 266 mit Betriebssystem Windows 95/NT 4.0 eingebunden werden. Es wird lediglich ein freier PCI- bzw. ISA-Slot für eine ISDN-Karte benötigt. Die Schnittstelle zum ISDN bildet das CAPI (Common ISDN Application Interface) eines integrierten ISDN-Controllers. Dabei wird die CAPI-Version 2.0 unterstützt. Die erfindungsgemäße Vorrichtung kann sowohl am S₀-Hauptanschluß als auch an einem S₀-Nebenanschluß einer ISDN-Telefonanlage betrieben werden und ist in LAN/WAN-Umgebungen integrierbar. Externe Datenbanken werden über ODBC mit SQL angebunden. Die Aufzeichnungskapazität sind nur von den PC-Ressourcen abhängig.

Das erfindungsgemäße Verfahren kann derart ausgestaltet werden, dass im Falle eines weiteren Anrufs bei bereits zum CTI-Arbeitsplatz AP bestehender Gesprächsverbindung, eine Umschaltung im zweiten Sprachkanal K2 und ein Hinweis darauf erfolgt. Sprachnachrichten und Informationen werden als elektronische Akte abgespeichert, wobei die elektronischen Akten am CTI-Arbeitsplatz AP benutzergesteuert abgehört und aktualisiert werden können. Alle Ereignisse innerhalb der Verbindungen werden in der Akte sekundengenau festgehalten. Durch das Abspeichern von Datum, Uhrzeit und Rufnummer jedes Anrufs lassen sich für frei definierbare Zeiträume Auswertungen erstellen. Integrierte Filter selektieren zusätzlich bestimmte Ereignisse, so dass nur ankommende bzw. abgehende Verbindungen oder einzelne Rufnummern bei der Abfrage bzw. beim Abhören erscheinen. Die Bedienprozeduren und/oder die Verzeichnisse zum Abrufen der elektronischen Akten sind an einer Anzeigevorrichtung des CTI-Arbeitsplatzes AP darstellbar und/oder abhörbar.

So können aufgenommene Nachrichten aus Voice-Mailboxen direkt aus der Akte über Soundkarte und Lautsprecher abgehört werden. Weiterhin können auch durch den Benutzer gesteuert oder zu vom Benutzer festgelegten Zeiten (beispielsweise Mittagspause) selbständig Verbindungen aufgebaut werden. So lassen sich beispielsweise automatisch Preise von Lieferanten abfragen (d.h. ergänzend über den zweiten Sprachkanal K2 übertragen) bzw. abspeichern. Ist der gewünschte Anschluss besetzt, wird automatisch zu einem späteren Zeitpunkt erneut die Verbindung hergestellt (falls das Gespräch schon beendet ist, kann die Information dann auch automatisch oder benutzergesteuert der elektronischen Akte zugeführt werden). Das Intervall bis zum nächsten Anruf sowie die Anzahl der Versuche sind dabei individuell konfigurierbar.

Im Vergleich zum bekannten Stand der Technik erfordert die erfindungsgemäße Vorrichtung keinen hohen Kostenaufwand zur Realisierung der verschiedenen Funktionen und erlaubt trotz der Funktionsvielfalt auch ungeübten Benutzern (oder Sehbehinderten bzw. Blinden) eine sichere Bedienung (und umfangreiche Auskunft während des Gesprächs) ggf. auch Sprachsteuerung mit akustischer Bedienerführung. Durch die Möglichkeit einer ständigen Information im zweiten Sprachkanal können benötigte Informationen auch rasch beschafft werden und zudem wird eine verbesserte Anrufverteilung mit überraschend geringem Aufwand ermöglicht. Weiterhin ist die einfache Anpassbarkeit an die verschiedenen Einsatzmöglichkeiten von Vorteil, so dass das erfindungsgemäße Verfahren auch beispielsweise in der Flugsicherung (Fluglotsen) eingesetzt werden kann, wobei z.B. bei einer Notlandung über den zweiten Sprachkanal wichtige Informationen für den Fluglotsen übertragen werden.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise kann die manuelle Abfrage bzw. Verbindung durch Benutzung der vorhandenen Tastatur des Computers bzw. des Telefon-Endgeräts bzw. durch Fußschalter erfolgen; der Zugriff auf die elektronischen Akten kann in Abhängigkeit von der Stimme des Benutzers und/oder einem Passwort erfolgen u.a.

## Patentansprüche

1. Verfahren zum Aufbau von Sprachverbindungen zu einem CTI-Arbeitsplatz (AP), bei dem
• zur Steuerung des Telefonverkehrs zum Festnetz der CTI-Arbeitsplatz (AP) mit einer Vermittlungsanlage (V) in Verbindung steht,
• der CTI-Arbeitsplatz (AP) direkt mit einem CTI-Server (S) in Verbindung steht, der wiederum direkt an die Vermittlungsanlage (V) angeschlossen ist und
• zu einem Kopfhörer (KH) mit einem Mikrofon und zwei Lautsprechern des CTI-Arbeitsplatzes (AP) sowohl die Sprachnachricht eines Anrufers als auch eine vom CTI-Server (S) abgerufene Sprach-Information auf zwei getrennten Sprachkanälen (K1, K2) zum Kopfhörer (KH) übertragbar sind, derart, dass der Kopfhörer (KH) ein Mikrofon (M) aufweist, welches mit dem Telefon-Endgerät (TE) in Verbindung steht, **dadurch gekennzeichnet, dass** der eine an das Telefon-Endgerät (TE) angeschlossene Lautsprecher (L1) das gesprochene Wort des Anrufers und der andere Lautsprecher (L2) die zur Nachricht zugehörige, von einem direkt an den CTI-Arbeitsplatz (AP) angeschlossenen Computer (PC) oder vom über ein Netzwerk (N) angeschlossenen CTI-Server (S) stammende Information gleichzeitig und fortlaufend wiedergibt, dass die Sprachnachricht des Anrufers entweder im Computer (PC) oder im CTI-Server (S) mindestens teilweise aufgezeichnet wird und am CTI-Arbeitsplatz (AP) benutzergesteuert wieder abrufbar ist, und dass im Falle eines weiteren Anrufs bei bereits zum CTI-Arbeitsplatz (AP) bestehender Gesprächsverbindung, mittels des Computers (PC) eine automatische Umschaltung im zweiten Sprachkanal (K2) und Einsteuerung eines Hinweis auf den neuen Anruf erfolgen, so dass ein Mischbetrieb mit computergestützter Verarbeitung und Steuerung von infolge einer Telekommunikationsverbindung übermittelten Sprach-Informationen einschließlich akustischer Bedienerführung erfolgt.

2. Verfahren nach Anspruch 1, **dadurch gekennzeichnet, dass** Sprachnachricht und Informationen als elektronische Akte abgespeichert werden und dass die elektronischen Akten am CTI-Arbeitsplatz (AP) benutzergesteuert abgehört und aktualisiert werden können, wobei der Zugriff auf die elektronischen Akten in Abhängigkeit von der Stimme des Benutzers erfolgt.

3. Verfahren nach Anspruch 4, **dadurch gekennzeichnet, dass** die Bedienprozeduren und/oder die Verzeichnisse zum Abrufen der elektronischen Akten an einer Anzeigevorrichtung des CTI-Arbeitsplatzes (AP) darstellbar und/oder abhörbar sind.

4. Vorrichtung zum Aufbau von Sprachverbindungen zu einem CTI-Arbeitsplatz (AP), welche
• über ein Telefon-Endgerät (TE) mit einer Vermittlungsanlage (V) zur Steuerung des Telefonverkehrs zum Festnetz in Verbindung steht,
• direkt mit einem CTI-Server (S) in Verbindung steht, der wiederum direkt an die Vermittlungsanlage (V) angeschlossen ist,
• am CTI-Arbeitsplatz (AP) einen Kopfhörer (KH) mit einem Mikrofon und zwei Lautsprechern (L1, L2) aufweist, wobei sowohl die Sprachnachricht eines Anrufers als auch eine vom CTI-Server (S) abgerufene Sprach-Information auf zwei getrennten Sprachkanälen (K1, K2) zum Kopfhörer (KH) übertragbar sind, derart, dass der Kopfhörer (KH) ein Mikrofon (M) und der CTI-Arbeitsplatz (AP) einen Computer (PC) aufweist, wobei Computer (PC) und Telefon-Endgerät (TE) drahtgebunden oder drahtlos mit dem Kopfhörer (KH) in Verbindung stehen **dadurch gekennzeichnet, dass** die Sprachnachricht des Anrufers entweder im Computer (PC) oder im CTI-Server (S) mindestens teilweise aufgezeichnet wird und am CTI-Arbeitsplatz (AP) benutzergesteuert wieder abrufbar ist, dass im Falle eines weiteren Anrufs bei bereits zum CTI-Arbeitsplatz (AP) bestehender Gesprächsverbindung, mittels des Computers (PC) eine automatische Umschaltung im zweiten Sprachkanal (K2) und Einsteuerung eines Hinweis auf den neuen Anruf erfolgen und dass der erste Lautsprecher (L1), das über das Telefon-Endgerät (TE) zugeführte gesprochene Wort des Anrufers und der zweite Lautsprecher (L2), die zur Nachricht des Anrufers aufgrund computergestützter Verarbeitung im Computer (PC) oder im über ein Netzwerk (N) angeschlossenen CTI-Server (S) zugehörige anwendungsabhängige und/oder für den Benutzer des CTI-Arbeitsplatzes (AP) relevante Sprach-Information gleichzeitig und fortlaufend wiedergibt, so dass ein Mischbetrieb mit computergestützter Verarbeitung und Steuerung von infolge einer Telekommunikationsverbindung übermittelten SprachInformationen einschließlich akustischer Bedienerführung erfolgt.

5. Vorrichtung nach Anspruch 4, **dadurch gekennzeichnet, dass** das Netzwerk (N) sowohl ein lokales Netz (LAN) als auch Telekommunikationsleitungen (TL) aufweist, dass das lokale Netz (LAN) einerseits am Computer (PC) andererseits am CTI-Server (S) angeschlossen ist und dass die Telekommunikationsleitungen (TL) einerseits mit einem Telefon-Endgerät (TE) andererseits mit der Vermittlungsanlage (V) verbunden sind.

6. Vorrichtung nach Anspruch 4, **dadurch gekennzeichnet, dass** der Computer (PC) neben Programmier- und CTI-Programmierschnittstellen eine Schnittstellenschaltung (SI) für Sprachsignale aufweist.

7. Vorrichtung nach einem oder mehreren der Ansprüche 4 bis 6, **gekennzeichnet durch** die Ausgestaltung des Netzwerkes (N) als Zwischenstufe zwischen einem rein seriellen und voll parallelen Bussystem mit serieller Datenübertragung und paralleler Übertragung von Steuersignalen, wobei der CTI-Server (S) eine Schnittstellenschaltung zum Anschluss einer zusätzlichen Informationsquelle (Q) aufweist.

## Claims

1. A method for establishing voice calls to a CTI workstation (AP), wherein
• for the control of telephone traffic to a fixed network the CTI workstation (AP) is connected to a switching system (V),
• the CTI workstation (AP) is in directly connection with a CTI server (S), which is in turn connected directly to the switching system (V) and
• the voice message of a caller as well as a caller information downloaded from CTI workstation (AP) are transferable on two separate voice channels (K1, K2) to a headphone (KH) of the CTI workstation (AP), this headphone (KH) having a microphone and two loudspeakers, in such a way that the headphone (KH) having a microphone is connected to a telephone terminal (TE), **characterized in that** one of the speaker (L1) connected to the telephone terminal (TE) reproduces simultaneously and continuously the spoken word of the caller and the other speaker (L2) represents the associated message for information, provided by an computer (PC), directly connected to a CTI workstation (AP), or by a CTI server (S), this is connected to a network (N), that the voice message of the caller is at least partially recorded in the computer (PC) or in the CTI server (S) and can user-controlled again be displayed on the CTI work station (AP) and that, in the case of a further call and existing speech connection to the CTI workstation (AP), by means of the computer (PC) the second speech channel (K2) is switched automatically and a notice to the new call is entered, thus a combined operation of computerized processing and controlling of speech-information, including acoustic user-control, and transmitted by telecommunication connection is done.

2. The method of claim 1, **characterized in that** voice message and information are stored as electronic files and that the electronic files on the CTI workstation (AP) can be listened user-controlled and can be updated, where access to the electronic files is a function of user's human voice.

3. The method according to claim 2, **characterized in that** the operating procedures and / or directories to retrieve the electronic document on a display device of the CTI work station (AP) can be displayed and / or tapped.

4. An apparatus for establishing voice connections to a CTI workstation (AP), which
• is connected by a telephone terminal (TE) to a switching system (V) for the control of telephone traffic to a fixed network,
• is in directly connection with a CTI server (S), which is in turn connected directly to the switching system (V),
• the CTI workstation (AP) having a headphone (KH) with a microphone and two loudspeakers (L1, L2), whereas the voice message of a caller as well as a caller information downloaded from CTI workstation (AP) are transferable on two separate voice channels (K1, K2) to the headphone (KH) in such a way that the headphone (KH) having a microphone and the CTI workstation (AP) having a computer (C), whereas computer (C) and telephone terminal (TE) are connected by wire or wireless means with the headphone (KH), **characterized in that** the voice message of the caller is at least partially recorded in the computer (PC) or in the CTI server (S) and can user-controlled again be displayed on the CTI work station (AP) and that, in the case of a further call and existing speech connection to the CTI workstation (AP), by means of the computer (PC) the second speech channel (K2) is switched automatically and a notice to the new call is entered, and that simultaneously and continuously the first speaker (L1) reproduces the spoken word of the caller supplied by the telephone terminal (TE) and the second speaker (L2) represents the associated message of the caller, which is a speech information relevant for the user of the CTI work station (AP) and is provided by an computer (PC) or by a CTI server (S), this is connected to a network (N), thus a combined operation of computerized processing and controlling of speech-information, including acoustic user-control, and transmitted by telecommunication connection is done.

5. The apparatus according to claim 4, **characterized in that** the network (N) comprising a local area network (LAN) as well as telecommunication lines (TL), that the local area network (LAN) on the one hand is connected to the computer (PC) and on the other hand to the CTI-server (S) and that the telecommunications lines (TL) on the one hand are connected with a telephone terminal (TE) and on the other hand with the switching system (V).

6. The apparatus according to claim 4, **characterized in that** the computer (PC) in addition to programming and CTI application programming interfaces, having an interface circuit (SI) for speech signals.

7. The apparatus according to one or more of the claim 4 to 6, **characterized by** the configuration of the network (N) as an intermediate between a purely serial and a fully parallel bus system with serial data transmission and parallel transmission of control signals, wherein the CTI server (S) comprises an interface circuit for connecting an additional source of information (Q).

## Revendications

1. Procédé d'établissement d'appels vocaux vers poste de travail CTI (AP), dans lequel
• pour le contrôle du trafic téléphonique au réseau fixe, le poste de travail CTI (AP) est relié à un système de commutation (V),
• le poste de travail CTI (AP) est connecté directement avec un serveur CTI (S), qui est à son tour connecté directement au système de commutation (V) et
• d'un moyen de casque d'écoute (KH) du poste de travail CTI (AP), comprenant un microphone (M) et deux haut-parleurs (L1, L2), le message vocal d'une appelant ainsi que l'application dépendante d'un serveur CTI (S) sont transmises au casque d'écoute (KH) par deux canaux vocaux séparés (K1, K2), de sorte que le casque d'écoute (KH) comprenant un microphone (M), celui est connecté avec le terminal téléphonique (TE),
**caractérisé en ce que** l'une haut-parleur (L1) connecté avec le terminal téléphonique (TE) reproduit en parallèle et de façon permanente le message vocal de l'appelant et l'autre haut-parleur (L2) représente en parallèle et de façon permanente le message associé pour information, l'information présentée par un ordinateur d'un poste de travail CTI (AP) connecté directement ou par un réseau (N) avec un serveur CTI (S), **en ce que** le message vocal de l'appelant, soit dans l'ordinateur (PC) ou le serveur CTI (S) est au moins partiellement enregistré, et à nouveau contrôlée par l'utilisateur est disponible au poste de travail CTI (AP) et **en ce que** dans le cas d'un autre appel lorsque déjà un connexion d'appel existante au poste de travail CTI (AP), au moyen de l'ordinateur (PC) une commutation automatique dans le second canal vocal (K2) et un avis est-il est fait, de telle sorte une opération de mélange avec le traitement informatique et le contrôle de la transmission à la suite d'une information de liaison de télécommunication par ordinateur est réalisée y compris l'information acoustique de l'appelant.

2. Procédé selon la revendication 1, **caractérisé en ce que** message vocal et les informations sont stockées sous forme de fichiers électroniques et que les fichiers électroniques sur CTI poste de travail (AP) peuvent être écoutés et mis à jour contrôlé par l'utilisateur, **en ce que** l'accès aux fichiers électroniques peuvent être contrôlé par la voix d'utilisateur.

3. Procédé selon la revendication 2, **caractérisé en ce que** les procédures d'exploitation et / ou des répertoires pour récupérer le document électronique sur un dispositif d'affichage de la station de travail CTI (AP) peuvent être affichées et / ou exploité.

4. Dispositif destiné à établir des connexions vocales vers un poste de travail CTI (AP), qui
• pour le contrôle du trafic téléphonique au réseau fixe, le terminal téléphonique (TE) est relié à un système de commutation (V),
• le poste de travail CTI (AP) est connecté directement avec un serveur CTI (S), qui est à son tour connecté directement au système de commutation (V) et
• d'un moyen de casque d'écoute (KH) du poste de travail CTI (AP), comprenant un microphone (M) et deux haut-parleurs (L1, L2), le message vocal d'une appelant ainsi que l'application dépendante d'un serveur CTI (S) sont transmises au casque d'écoute (KH) par deux canaux vocaux séparés (K1, K2), de sorte que le casque d'écoute (KH)
• comprenant un microphone (M) et le poste de travail CTI (AP) comprenant un ordinateur (PC) celui et le terminal téléphonique (TE) sont connecté sans fil ou avec fil avec le casque d'écoute (KH), **caractérisé en ce que** le message vocal de l'appelant, soit dans l'ordinateur (PC) ou le serveur CTI (S) est au moins partiellement enregistré, et à nouveau contrôlée par l'utilisateur est disponible au poste de travail CTI (AP) et **en ce que** dans le cas d'un autre appel lorsque déjà un connexion d'appel existante au poste de travail CTI (AP), au moyen de l'ordinateur (PC) une commutation automatique dans le second canal vocal (K2) et un avis est-il est fait, et **en ce que** l'une haut-parleur (L1) connecté avec le terminal téléphonique (TE) reproduit le message vocal de l'appelant et l'autre haut-parleur (L2) reproduit le message vocal de l'appelant en parallèle et de façon permanente, l'information associé est présentée par un ordinateur (PC) ou par un serveur CTI (S) connecté au réseau (N) et /ou est pertinent pour les utilisateurs de poste de travail CTI (AP), de telle sorte une opération de mélange avec le traitement informatique et le contrôle de la transmission à la suite d'une information de liaison de télécommunication est réalisée y compris l'information acoustique de l'appelant.

5. Dispositif selon la revendication 4, **caractérisé en ce que** le réseau (N) comprenant à la fois un réseau local (LAN) et des lignes de télécommunication (TL), **en ce que** le réseau de zone locale (LAN) est connecté d'une part à l'ordinateur (PC) d'autre part, au CIT-serveur (S) et en que les lignes de télécommunication (TL) sont connectés d'une part avec un terminal téléphonique (TE) d'autre part avec le système de commutation (V).

6. Dispositif selon la revendication 4, **caractérisé en ce que** l'ordinateur (PC), en plus de la programmation et d'interfaces de programmation d'application CTI, comprenant un circuit d'interface (IS) pour les signaux de parole.

7. Dispositif selon l'une ou plusieurs des revendications 4 à 6, **caractérisé par** la configuration du réseau (N) comme intermédiaire entre un système de bus série pure et parfaitement parallèle avec la transmission de données en série et la transmission parallèle des signaux de commande, dans lequel le serveur CTI (S) comprend un circuit d'interface pour connecter une source d'information supplémentaire (Q).
